(19) Europäisches Patentamt | European Patent Office | Office européen des brevets

(11) **EP 3 725 049 B1**

(12) **EUROPEAN PATENT SPECIFICATION**

(45) Date of publication and mention
of the grant of the patent:
**01.11.2023 Bulletin 2023/44**

(21) Application number: **17823062.9**

(22) Date of filing: **11.12.2017**

(51) International Patent Classification (IPC):
**H04L 47/41** (2022.01)      **H04L 47/283** (2022.01)

(52) Cooperative Patent Classification (CPC):
**H04L 47/41; H04L 45/24; H04L 47/283; H04W 8/04**

(86) International application number:
**PCT/EP2017/082279**

(87) International publication number:
**WO 2019/114926 (20.06.2019 Gazette 2019/25)**

(54) **TRANSMISSION METHOD AND APPARATUS**

ÜBERTRAGUNGSVERFAHREN UND -VORRICHTUNG

APPAREIL ET PROCÉDÉ DE TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.10.2020 Bulletin 2020/43**

(73) Proprietor: **Nokia Solutions and Networks Oy
02610 Espoo (FI)**

(72) Inventors:
• **KUCERA, Stepan**
  **Dublin, D15 Y6NT (IE)**
• **CHIARIOTTI, Federico**
  **Dublin, D15 Y6NT (IE)**
• **ZANELLA, Andrea**
  **Dublin, D15 Y6NT (IE)**

(74) Representative: **Script IP Limited
Suite J, Anchor House
School Close
Chandlers Ford
Eastleigh, Hampshire SO53 4DY (GB)**

(56) References cited:
**WO-A1-2016/128179**

• **WU JIYAN ET AL: "Streaming High-Quality Mobile Video with Multipath TCP in Heterogeneous Wireless Networks", IEEE TRANSACTIONS ON MOBILE COMPUTING, IEEE SERVICE CENTER, LOS ALAMITOS, CA, US, vol. 15, no. 9, 1 September 2016 (2016-09-01), pages 2345-2361, XP011618393, ISSN: 1536-1233, DOI: 10.1109/TMC.2015.2497238 [retrieved on 2016-08-03]**
• **YONG CUI ET AL: "FMTCP: A Fountain Code-Based Multipath Transmission Control Protocol", IEEE / ACM TRANSACTIONS ON NETWORKING, IEEE / ACM, NEW YORK, NY, US, vol. 23, no. 2, 1 April 2015 (2015-04-01), pages 465-478, XP058071800, ISSN: 1063-6692, DOI: 10.1109/TNET.2014.2300140**
• **WU JIYAN ET AL: "Bandwidth-Efficient Multipath Transport Protocol for Quality-Guaranteed Real-Time Video Over Heterogeneous Wireless Networks", IEEE TRANSACTIONS ON COMMUNICATIONS, IEEE SERVICE CENTER, PISCATAWAY, NJ. USA, vol. 64, no. 6, 1 June 2016 (2016-06-01), pages 2477-2493, XP011613845, ISSN: 0090-6778, DOI: 10.1109/TCOMM.2016.2553138 [retrieved on 2016-06-14]**

## EP 3 725 049 B1

**Description**

FIELD OF THE INVENTION

This application provides a method, computer program product and apparatus to send data packets from a sender to a receiver in a communication network, over one or more communication links. The data packets form a data flow and have an associated delivery target time. A reliability target is also associated with said data flow.

BACKGROUND

There is a widely recognized need to enable efficient control of data delivery latency in 5G wireless communication networks. Explicit latency control is a key 5G differentiator and a fundamental precursor for supporting user-defined quality of service.

Transport-layer protocols such as TCP and UDP are unable to support explicit control of a throughput, latency and reliability trade-off to meet a pre-defined quality-of-service target of an operator, user or application.

Protocols such as TCP and UDP were typically designed for efficient capacity allocation, that is to say: they employ capacity-oriented congestion control with poor latency performance which can be attributed to self-inflicted queuing delay. Some TCP variants such as TCP Vegas, and emerging protocols such as Sprout and Verus can, to some extent, mitigate the queuing delay issue but they are not widely deployed either due to their poor throughput performance and/or complexity.

More fundamentally, legacy single-path protocols offer only best-effort performance without any Quality of Service (QoS) guarantees since their performance is limited by communication link reliability. To ensure timely delivery of data independently of link outages, for example, due to poor wireless coverage, it is necessary to multiplex several parallel links. Existing multi-connectivity solutions such as MPTCP are, however, unable to perform the multiplexing task properly and suffer delays due to head-of-line blocking, which can be exacerbated by the inherent volatility of, for example, wireless radio links.

Some protocols may try to resolve such problems but are still unable to provide any latency guarantees as a result of: QoS-unaware congestion control multi-path scheduling, and a failure to overcome the problem of retransmission given highly unreliable heterogeneous wireless radio links.

WU JIYAN ET AL: "Streaming High-Quality Mobile Video with Multipath TCP in Heterogeneous Wireless Networks" IEEE Transactions on mobile computing, IEEE Service Center, LOS ALAMITOS, CA, US, vol. 15, no. 9, 1 September 2016 (2016-09-01) pages 2345-2361 describes a method to achieve optimal quality of real-time video streaming in multipath networks. The methods described relate to a quality-driven multipath scheme which integrates forward error correction and rate allocation. An analytical framework is described which models MP TCF-based video delivery quality over multiple communication paths.

WO2016/128179 A1 describes a method for transmitting data in a multi-path heterogeneous network, in which at least one of the paths delivers packets with a nondeterministic delivery time. The described method provides a technique for selecting on which path to schedule transmission of information packets, minimising the expected in-order delivery delay, taking due account of an uncertain, time-varying nature of delay on each path.

It is one aim of aspects and embodiments described to provide a method and apparatus which may address one or more of the issues identified when balancing data delivery latency and reliability to try to ensure a positive end user experience.

SUMMARY

A first aspect provides a method of sending data packets from a sender to a receiver in a communication network, according to claim 1.

The application provides a novel transport layer (for example, Layer 4 in an OSI stack) which is capable of maintaining data delivery latency below a given target level with a pre-defined reliability whilst aiming to maximise a data rate achievable given those constraints.

For example, instead of providing best-effort services such as those typically used in 3G CDMA and 4G LTE networks, a 5G network may use methods according to aspects and embodiments described to guarantee delivery of customer-critical data (for example, Virtual Reality teleconferencing associated with a premium customer) within pre-defined human interactivity deadlines (typically less than 100ms) with a selected minimum reliability (for example, at least 99% of a connection duration) resulting in a truly immersive user experience devoid of, for example, a frozen or pixelated screen. Concurrently, a minimum throughput can be maintained, thus ensuring good video resolution and audio quality (for example, at least 10Mbps).

More formally, the method operates such that constraints are set by an application, user and/or operator policy such that a given data flow must be delivered from a sending device to a receiving device subject to:

(i) maximum latency constraint (for example, max 100ms for each data packet) and
(ii) minimum reliability constraint (for example, at least 95% packets delivered within the latency constraint deadline).

Assuming constraints (i) and (ii) are fundamentally feasible, the method operates to solve the problem of defining a transport-layer protocol which can, in some implementations, maximize the average transmission rate over the wireless link(s) given constraints (i) and (ii) set out above.

The method provides a transport layer protocol for sending data packets from a sender to a receiver in a communication network. The communication network may be a wireless communication network. The communication network may be a wired communication network. The communication network may comprise a mixed-link technology communication network including both wired and wireless links between a sender and a receiver.

The method of described aspects and embodiments may be implemented to operate when a sender and receiver are communicating using a single link, but has particular applicability in an arrangement in which a sender and receiver are communicating using multiple links. Those multiple links may all be independent links. The communication between sender and receiver may occur as a multi-flow communication. The multi flow communication may occur as concurrent transmissions on parallel independent communication links.

The data packets sent on the one or more communication links between sender and receiver together form a data flow. The data flow may provide a service to an end user or end application.

The method according to aspects and embodiments comprises determining a delivery target time period associated with data packets forming said data flow. That delivery target time comprises for example, a data flow latency constraint. That latency constraint relates to a particular amount of data to be delivered within a selected time period, or by a selected deadline (after transmission) in order to support a service at a user or application.

The method according to aspects and embodiments comprises: determining a reliability target associated with said data flow. That reliability target may, for example, comprise a percentage of data packets which it is desired to be successfully received at a receiver. The reliability target relates to data packets of the data flow which are successfully received within the latency constraint selected in support of a particular service to be provided to a user.

The method comprises: obtaining an indication of performance of each of said one or more communication links between said sender and receiver. A sending device, or other entity within a network, is operable to receive feedback in relation to a link between a sender and a receiver. The feedback may provide information about the ambient or current performance characteristics of the communication link. If data packets are already being sent between the sender and receiver, the feedback relates to the communication link performance in relation to those data packets already being sent using the communication link. If no data packets relating to the data stream are already being sent, then the feedback information may relate to other transmissions between a sender and the receiver, for example, probe packets.

The method comprises: determining a raw data carrying capacity of each of said one or more communication links indicating the data carrying capacity of each of said one or more communication links within said delivery target time, the raw data carrying capacity being based on said indication of performance of said one or more communication links.

The method comprises: determining a latency-constrained data carrying capacity of each of said one or more communication links indicating the data carrying capacity of each of the one or more communication links within the delivery target time, the latency-constrained data carrying capacity being based on the reliability target. In some arrangements, the latency-constrained data carrying capacity is based on said reliability target and an indication of performance of the one or more communication links.

The raw and latency-constrained data carrying capacity may be determined on a per-communication link basis. The indication of performance of the one or more communication links may be a time-related picture of the performance of the communication link(s). The time-related picture may comprise a time-averaged performance of the one or more communication links.

The method comprises: calculating a data batch size for each of said one or more communication links between said sender and receiver. The calculated batch size is calculated on a per-link basis. The calculated batch size is based on said determined raw data carrying capacity of each of said one or more communication links.

The method comprises: selecting a number of said data packets and redundant packets to send in said calculated data batch size in dependence upon said determined latency -constrained data carrying capacity of each of said one or more communication links. The selected number of raw data packets is chosen on the basis of a combined communication link calculated batch size (ie the sum of batch sizes calculated for each of the communication links). The raw data packets comprises the data packets forming the data flow. The redundant packets may be used for various network coding methods, for example, repetition or linear combinations of said raw data packets. The redundant packets may be used to try to ensure combination and error correction methods may be used by a receiving entity to recreate the raw data packets forming part of the data flow. That is to say, the selected number of raw data packets in a batch may be chosen such that, given the communication link performance, latency constraint and reliability constraint, the chance of successful transmission of the raw data packets is substantially guaranteed, given the error correction and repetition of the raw data packets in the redundant packet of a given batch. It will be appreciated that the calculation to select an appropriate proportion of raw data packets and redundancy packets may be performed taking into account available resource and link performance across the various communication links between a sending entity and receiving entity within the communication network.

The method comprises: sending one or more data packets from said data flow together with said redundant packets in accordance with said selection in said calculated data batch for each of said one or more communication links.

It can therefore be understood that some implementations of aspects and embodiments may innovatively employ a wireless network multi-connectivity and network coding to enforce a pre-defined QoS target. According to some aspects and embodiments, a method may operate to: split a data flow associated with a Quality-of-Service (QoS) constraint into multiple subflows which can be delivered over multiple independent parallel links (for example, WiFi and LTE, WiGig and 5G). The method also operates to: adaptively set subflow data rates and apply cross-path encoding and/or redundancy based on a dynamic performance estimate of each parallel path in order to satisfy target QoS constraints (for example, minimum reliability and maximum delay). According to some aspects and embodiments, any type of transmitted data can be used as an active probe for path performance tracking.

Aspects and embodiments may display an improved capability to provide stable throughput with bounded latency, both in wired and wireless scenarios.

In some embodiments, obtaining an indication of performance of each of the one or more communication links between the sender and receiver comprises: obtaining an indication of performance of the one or more communication links over a preceding time period equivalent to the delivery target time period. Accordingly, a sender receives an indication of "current" performance of a communication link. The most recent feedback will be determined by the round trip time (from sender to receiver and back), thus the sender cannot receive an instantaneous indication of current performance, but can receiver an indication of relatively recent link performance upon which to base subsequent transmissions. If the delivery target time period is longer than the round trip time, then a sender may use feedback from the nth transmission slot in order to make batch and coding decisions in relation to the n+1th transmission slot.

In some embodiments, obtaining an indication of performance of each of said one or more communication links between said sender and receiver comprises: obtaining an indication of performance of said one or more communication links over a plurality of preceding time periods equivalent to said delivery target time period.

In some embodiments, obtaining an indication of performance comprises: receiving feedback relating to data received at the receiver within a time slot, the target delivery time period being equivalent in duration to one or more time slots. That is to say, the feedback may relate to an immediately previous set of data packets forming part of the data flow, sent by the sender to the receiver.

Obtaining an indication of performance comprises: receiving feedback from the receiver in relation to one or more data packets sent by the sender to the receiver using the one or more communication links. That is to say, the feedback relates to data packets forming part of the data stream, previously sent as part of the present method. In that way, the method operates to provide a feedback loop, allowing for real-time adjustment of the data transmission method to meet latency and reliability targets.

In some embodiments, obtaining an indication of performance comprises: receiving an indication of one or more of: timestamp; data packet sequence number; sequence number of last received data packet; number of data packets delivered within a time slot using the one or more communication links; number of data packets successfully delivered within a target delivery time period; indication of missing data packets in a time slot, indication of whether missing data packets are consecutive data packets, indication of sequence number of missing data packet(s). It will be appreciated that the feedback provided by a receiver to a sender may take various forms.

In some embodiments, determining a raw data carrying capacity of each of the one or more communication links indicating the data carrying capacity of each of the one or more communication links within the delivery target time comprises: using the indication of performance of the one or more communication links to calculate a time-related capacity measure. Accordingly, the communication link may be modelled and a method according to aspects and embodiments may be performed based on a "smoothed" picture of radio link performance. The radio link performance characteristics may, for example, be modelled to perform as Gaussian functions and the probability of link performance according to the model may allow implementation of aspects and embodiments which perform more predictably and are less likely to display large performance oscillations.

In some embodiments, determining a raw data carrying capacity of each of the one or more communication links indicating the data carrying capacity of each of the one or more communication links within the delivery target time comprises: using the indication of performance of the one or more communication links to calculate a time-related capacity measure reduced proportionally to account for estimated capacity variance. Accordingly, some implementations of the method may account for losses likely to be incurred over a communication link.

In some embodiments, calculating a data batch size for each of the one or more communication links between the sender and receiver comprises: calculating a data batch size across each one of the one or more communication links, based on a determined raw data carrying capacity each one of the one or more communication links. Accordingly, aspects may allow for efficient use of multiflow communication links when such links are available.

In some embodiments, selecting a number of the data packets and redundant packets to send in the calculated data batch size comprises: calculating a ratio comprising a sum of latency-constrained data carrying capacity across said one or more communication links to a sum of raw data carrying capacity across said one or more communication links and selecting said number of data packets to send in dependence upon said calculated ratio. Accordingly, aspects may allow for efficient use of multiflow communication links when such links are available.

In some embodiments, one or more sent data packets comprise one or more new data packets and retransmission of one or more previously sent data packets forming the data flow. In some embodiments, the redundant packets comprise one or more of: repetition of the one or more sent data packets from the data flow; random linear combinations of the one or more sent data packets from the data flow. In some embodiments, the redundant packets comprise one or more error correction mechanisms including one or more network coding methods comprising: repetition; random linear codes; rateless codes; reed-solomon codes; parity codes; fountain codes; LPDC codes and hamming codes.

In some embodiments, inter-packet intervals are computed as a function of the calculated batch size. Accordingly, fairness between users within a communication network may be obtained. In some embodiments, inter-packet intervals are computed as a fraction of the calculated batch size.

A second aspect may provide a computer program product operable, when executed on a computer, to perform the method of the first aspect.

A third aspect may provide data packet transmission apparatus configured to send data packets to a receiver in a communication network, according to claim 15.

Obtaining an indication of performance of each of the one or more communication links between the sender and receiver comprises: obtaining an indication of performance of the one or more communication links over a preceding time period equivalent to the delivery target time period.

Obtaining an indication of performance of each of said one or more communication links between the sender and receiver comprises: obtaining an indication of performance of the one or more communication links over a plurality of preceding time periods equivalent to the delivery target time period.

Obtaining an indication of performance comprises: receiving feedback from the receiver in relation to one or more data packets sent by the sender to the receiver using the one or more communication links.

In some embodiments, obtaining an indication of performance comprises: receiving feedback relating to data received at the receiver within a time slot, the time slot being equivalent in duration to the target delivery time period.

In some embodiments, obtaining an indication of performance comprises: receiving an indication of one or more of: timestamp; data packet sequence number; sequence number of last received data packet; number of data packets delivered within a time slot using the one or more communication links; number of data packets successfully delivered within a target delivery time period; an indication of missing data packets in a time slot.

Determining a raw data carrying capacity of each of the one or more communication links indicating the data carrying capacity of each of the one or more communication links within the delivery target time comprises: using the indication of performance of the one or more communication links to calculate a time-related capacity measure.

Determining a latency-constrained data carrying capacity of each of the one or more communication links indicating the data carrying capacity of each of the one or more communication links within the delivery target time comprises: using the indication of performance of the one or more communication links to calculate a time-related capacity measure reduced proportionally to account for estimated capacity variance.

Calculating a data batch size for each of the one or more communication links between the sender and receiver comprises: calculating a data batch size across each one of the one or more communication links, based on a determined raw data carrying capacity each one of the one or more communication links.

Selecting a number of the data packets and redundant packets to send in the calculated data batch size in dependence upon the reliability target associated with the data flow comprises: calculating a ratio comprising a sum of latency-constrained data carrying capacity across said one or more communication links to a sum of raw data carrying capacity across said one or more communication links and selecting said number of data packets to send in dependence upon said calculated ratio.

In some embodiments, the one or more sent data packets comprise: one or more new data packets and retransmission of one or more previously sent data packets forming the data flow.

In some embodiments, the redundant packets comprise one or more error correction mechanisms including one or more network coding methods comprising: repetition of the one or more sent data packets from the data flow; random linear codes; reed-solomon codes; rateless codes; parity codes; fountain codes; LPDC codes and hamming codes.

In some embodiments, inter-packet intervals are computed as a fraction of the calculated batch size.

The application provides a method of providing an indication of performance of each communication link operating to transport data packets from a sender to a receiver in a communication network, the data packets forming a data flow, the method comprising: providing the sender with an indication of communication link performance over a delivery target time period associated with data packets forming the data flow. Accordingly, a receiver in a communication network is appropriately configured to provide feedback information to a sender in relation to each communication link between the sender and the receiver. The feedback information includes performance information indicative of the latency performance and reliability performance of transmission of data packets made by a sender, those data packets forming part of a data flow supporting a service being provided by a user or application.

Further aspects may provide a computer program product and apparatus operable to provide appropriate feedback to a sender.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

Embodiments and aspects not covered by the appended claims are not part of the invention.

BRIEF DESCRIPTION OF THE DRAWINGS

Embodiments of the present invention will now be described further, with reference to the accompanying drawings, in which:

Figure 1 illustrates schematically a method according to one general implementation;
Figure 2 illustrates schematically elements of one possible arrangement;
Figure 3 illustrates schematically elements of one possible arrangement via operation of a Kalman filter; and
Figure 4 illustrates graphically comparative performance of possible arrangements.

DESCRIPTION OF THE EMBODIMENTS

Before discussing the embodiments in any more detail, first an overview will be provided.

Some implementations of aspects and embodiments may innovatively employ a wireless network multi-connectivity and network coding to enforce a pre-defined QoS target. According to some aspects and embodiments, a method may operate to: split a data flow associated with a Quality-of-Service (QoS) constraint into multiple subflows which can be delivered over multiple independent parallel links (for example, WiFi and LTE, WiGig and 5G). The method also operates to: adaptively set subflow data rates and apply cross-path encoding and/or redundancy based on a dynamic performance estimate of each parallel path in order to satisfy target QoS constraints (for example, minimum reliability and maximum delay). According to some aspects and embodiments, any type of transmitted data can be used as an active probe for path performance tracking.

Aspects and embodiments may display an improved capability to provide stable throughput with bounded latency, both in wired and wireless scenarios.

Overview

Arrangements assume slotted time and pre-defined QoS constraints are considered on a per-(time)slot basis. According to some aspects and embodiments a QoS-aware protocol (sometimes referred to as the "Algorithm") may operate to send application data from a sending device based on slot-specific feedback from a receiving device. The general operation of the protocol may be summarized according to the following three main phases.

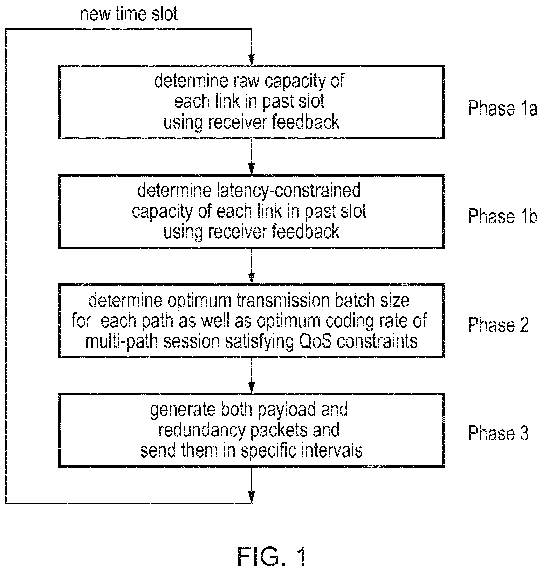

Figure 1 illustrates graphically the three main phases of the protocol according to a general arrangement.

Phase (1)

Using control feedback, the protocol operates to determine: an unconstrained ("raw") capacity of an independent path i in a time slot n, and a latency-constrained ("delivery") capacity an independent path i in a time slot n, for a given latency constraint, T. The control feedback may typically contain sufficient information required to derive at least one of the following values: timestamp; a sequence number associated with a last received packet; an indication of number of packets totally delivered on the transport layer in time slot n over independent network path i (for example, a number of packets transmitted by a sender and acknowledged by a receiver in the last slot, or a number of packets acknowledged by a receiver in the last slot without any regard to an actual transmission slot); the number $a_i(n)$ of packets successfully delivered in slot n over path i within the pre-defined deadline (for example, the sum of packets with acknowledged delivery and packets with possibly completed but not yet acknowledged delivery), and the number ei(n) of missing packets in time slot n on path i (for example, the number of physical packet loses defined as isolated sequence number holes, and/or the number of overflow losses defined as large contiguous sequence number holes).

Phase (2)

Using the determined unconstrained capacity and latency-constrained capacity of phase 1, the protocol may then operate to determine: an optimum transmission batch size $s_i(n+1)$ for each path i for the next slot n+1 (in some arrangements the optimum transmission batch size may be subject to a minimum batch size in order to ensure a reliable and continuous capacity estimation); and an optimum session coding rate $R_c(n+1) = K/N$ of a multi-path connection for the next slot n+1 and a given maximum permissible failure rate $p_e$ where: K is the sum of all optimum deliverable payload sizes, and N is the sum of all optimum transmission batch sizes.

In some arrangements, optimum batch sizes may be determined to be the (mean) capacity measures determined by the method set out in relation to phase (1). In some arrangements those mean capacity measures may be reduced proportionally to the capacity estimation error (for example, a multiple of an estimated capacity variance). In some arrangements, determination of coding rate may be such that an optimum deliverable payload size $d_i(n+1)$ for each path i in the next slot, $n+1$ may be determined using an analogous error-dependent scaling approach.

Phase (3)

According to phase 3 of the protocol, at the beginning of a time slot n+1, a sender is configured to send a batch of $s_i(n+1)$ packets on each path i such that: each batch comprises payload packets. That payload may, in some arrangements, include one or more re-transmissions of data from previous slots if re-transmissions are required). According to some arrangements, the transmission may also include one or more redundancy packets generated in accordance to an optimum session coding rate. The redundancy packets are, in some arrangements, obtained from payload packets by duplication, and/or random linear combinations, and/or other operations that make recovery of the original payload packets possible if a sufficient number of payload and/or redundancy packets are received at a receiving entity.

Transmission by a sender may be implemented in some arrangements such that inter-packet intervals are computed as function of batch size. Such an implementation may ensure capacity allocation fairness. For example, inter-packet interval may increase with packet sequence number within a batch.

Transmission by a sender may be implemented in some arrangements such that maximum packet payload size and/or maximum control information size are selected such that they do not exceed a maximum transmission unit accordingly, IP fragmentation can be avoided.

Examples

Two exemplary implementations of possible arrangements are now described. The implementations described aim to maximize end-to-end connection throughput subject to latency and reliability constraints.

It is assumed throughout the examples that an application data flow comprises an ordered series of payload packets, characterized by ascending sequence number p. All packets of the data flow must be delivered in order, that is to say, packet p can be delivered from the transport layer to the application layer of the receiver only if all preceding packets 1 to p-1 have been delivered.

A pre-configured application profile, operator subscriber policy or interactive user command defines a maximum latency $L_p$ for the delivery of data packet i (for example, deadline $L_p$=100ms). A pre-configured application profile, operator subscriber policy or interactive user command may also define a maximum permissible tolerance to latency violations (for example, a maximum tolerance of 5% giving an overall reliability R of at least 95%.

The arrangements described assume time is (non-uniformly) slotted (slots begin at time t) and that a sender receives packet delivery feedback starting from time $t + \tau$ where $\tau$ is the path round-trip time (RTT). In some arrangements, uplink feedback may be sent over the link from receiver to sender with a low delay.

According to one arrangement, a sender may define a delivery deadline T, $T>\tau$, and require that at least R percent of packets to be delivered on time in the latest acceptable slot.

In an alternative arrangement, QoS may be defined such that a sender may require at least R percent of timeslots to have all associated packets delivered on time (that is to say, within a delay T from the beginning of a so-called "generation" slot).

Example 1: Probabilistic latency control using Kalman filtering

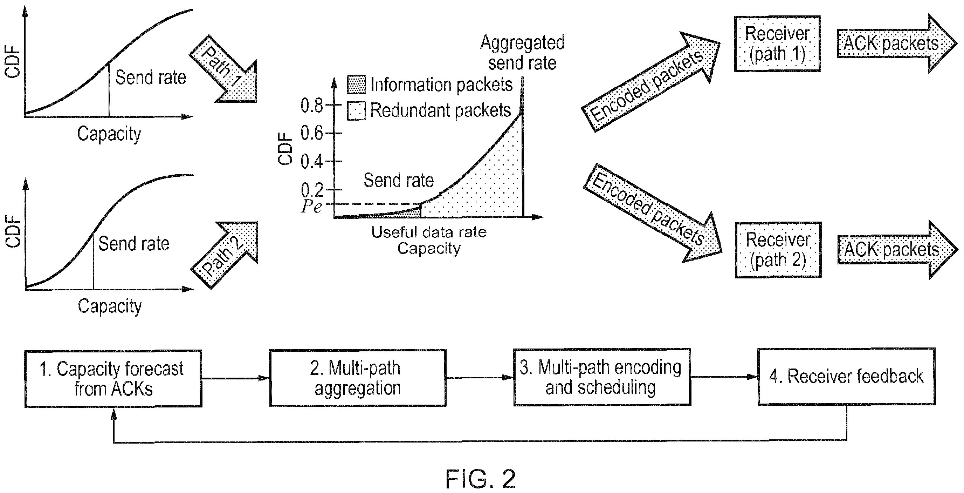

Figure 2 illustrates schematically an example implementation according to one arrangement.

According to the arrangement shown schematically in Figure 2, after sending a batch of packets on each of the available paths, a sender is configured to receive one or more cumulative acknowledgments from a receiver and use the number of acknowledged packets and the timestamps of the ACK packets to estimate RTT $\tau$ and capacity of each end-to-end channel.

In the arrangement of Figure 2, the implemented protocol operates in discrete time slots, that is to say, packets are sent in discrete batches which share a common deadline (for example, a video frame or an HTTP object).

According to the illustrated arrangement, capacity is estimated on a time slot basis, where the duration of a slot is equivalent to the deadline T, which must be not smaller than the maximum RTT of all the parallel paths used. It will be appreciated that if a path's RTT is higher than the deadline, none of the packets sent via that path will contribute to the guaranteed-latency throughput. The size of the next batch of packets on each path can be determined by tracking the evolution of path capacity and estimating its probability distribution.

According to the illustrated arrangement, the estimated distributions of all the available paths are aggregated into a multi-path Cumulative Distribution Function (CDF), which can be used to find the correct coding rate. The K original packets are encoded into N packets where N is the total batch size for all the aggregated paths. The coding rate $R_c =$ K / N represents the efficiency of the channel utilization, so that $1 - R_c$ is a measure of the coding overhead. $R_c$ also determines the strength of the coding, in other words: how many losses can be tolerated while still recovering the original K packets. According to the arrangement described, the coding rate is determined by a required reliability threshold $p_s$ (set to 90% in the arrangement illustrated in Figure 2 or, equivalently, by a required error probability $p_e = 1 - p_s$.

The packets are then encoded using a packet-level code, and the coded packets are scheduled for delivery over each available path subject to the calculated per-path batch size limit.

The receiver receives packets and periodically sends acknowledgment packets, which can then be used by the sender to refine the path distribution estimates and begin the cycle anew.

More formally, Example 1 is implemented as follows:

Phase (1)

The method of the arrangement illustrated operates to determine the PDF of the unconstrained ("raw") capacity C available in path i in slot n assuming the capacity of a path is a Gaussian process with normal distribution. The PDF mean $\mu_{\{C,i\}}(n)$ and variance $\sigma_{\{C,i\}}(n)$ is computed by using Kalman filtration of the latest path capacity estimate $C_i(n)$.

$$C_i(n) = \frac{a_i(n) + e_i(n)}{T - \tau}$$

Where:

$a_i(n)$ is the number of packets transmitted by the sender and acknowledged by the receiver in the last slot (alternatively, one can disregard the transmission slot and simply consider the number of packets acknowledged by the receiver in the last slot);

$e_i(n)$ is the number of packets missing for other than congestion reasons (isolated sequence number holes suspected to be wireless losses are added to $e_i$ while larger consecutive blocks of missing data are deemed to be buffer overflow losses and are not reported in $e_i(n)$).

The variances $R_i$, $Q_i$ of the Kalman noise processes are derived from autocorrelation of the estimated error. For example, $\sigma_{\{C,i\}}(n) = Q_i(n)^2 + R_i(n)^2$.

In the example arrangement shown schematically in Figure 2, the number of queued packets is not used to augment the Kalman filter input $a_i + e_i$ since that augmentation can cause performance instability. In particular, unavoidable capacity overestimation in Phase (1) causing packet queueing would otherwise skew the subsequent capacity feedback to artificially low values, ie cause throughput oscillations. Any correction based on subtracting the expected number of in-flight packets only increases the capacity estimation variance, ie leads to less efficient transmission and stronger oscillatory effects (implementation of a Kalman filter with a higher $Q_i$ tends to follow changes in the feedback more quickly which causes more frequent spurious effects). Incorporating the feedback on packet delivery associated with time slots preceding the last slot n-1 is also avoided in the illustrated arrangement since capacity over/underestimation in multiple time slots would have a cumulative effect causing even stronger instability oscillations.

A typical implementation assumes a Kalman filter is implemented on the sender side in which case the receiver must send a packet acknowledgement (ACK) feedback to the sender. In general, ACK feedback can be sent immediately after a packet is received (even if received out of order). Acknowledgement (ACK) sequence numbers can be used to avoid any reordering of data acknowledgements while time stamps can be used to measure RTT $\tau$ for each path at the sender.

In some arrangements, however, the receiver may be configured such that it sends only cumulative periodic updates in relation to the two values: $a_i$ and $e_i$, confirming the number of packets delivered per unit of time.

In either case, acknowledgements can be sent from the receiver on an arbitrary path provided path indexing is used in relation to acknowledgements to indicate the path with which the feedback is associated. If data acknowledgements are sent at regular intervals rather than on a per-packet basis, the RTT measure $\tau$ is derived based on the last acknowledged packet (for example, indexed as $a_i + e_i$).

In the example illustrated schematically by Figure 2, the ACK feedback comprises an indication of the following information: slot number n and path number i associated with an ACK packet; numbers $a_i(n)$ and $e_i(n)$ where $e_i(n)$ covers only physical losses (congestion losses are ignored/masked); a time stamp and the last received packet sequence number (whose transmission time is then used to compute the RTT of path P).

In an alternative arrangement, the ACK feedback can equivalently comprise an indication of: path index p, the absolute number $a_i(p)$ as well as the absolute number $e_{iPHY}(p)$ for physical losses and the absolute number $e_{iCON}(p)$ for congestion losses; and a timestamp (the RTT of flow i can then be computed for the $a_i(p) + e_{iPHY}(p) + ei_{CON}(p)$-th packet).

In the example of Figure 2, the unconstrained ("raw") capacity C is calculated and the protocol also operates to determine the PDF of the latency-constrained ("delivery") capacity of path i in slot n. Again using a Gaussian model, the PDF mean $\mu_{\{D,i\}}(n)$ and variance $\sigma_{\{D,i\}}(n)$ is computed by using Kalman filtration of the estimated number $d_i(n)$ of successfully delivered packets over path i in slot n.

For example, one arrangement may use:

$$\hat{d}_i(n) = a_i(n) + \frac{\tau}{2}\mu_{c,i}(n)$$

where $\tau/2$ multiplied by $\mu_{\{C,i\}}(n)$ approximates the unknown number of packets delivered on time to a receiver but acknowledged after deadline T to the sender.

Phase (2)

Subject to a maximum permissible failure rate $p_e$ defined by a user or application, an arrangement may be operable to determine or forecast an optimum transmission batch size $s_i(n+1)$ for all paths i for the next slot n+1. Given the unconstrained path capacity PDF determined during phase 1, an optimum batch size can be set as "$s_i(n) = \mu_{\{C,1\}}(n)$" or as

$$s_i(n+1) = \mu_{c,i}(n) - \alpha\sigma_{c,i}(n)$$

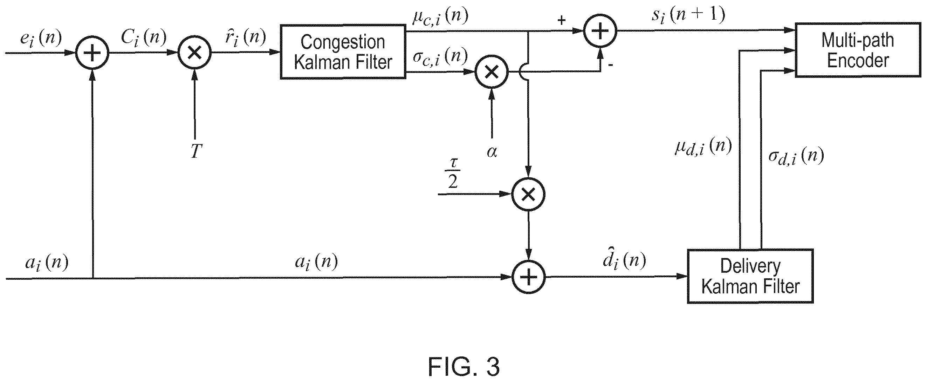

as summarized in relation to Figure 3.

In the illustrated example, there is a minimum $s_{i\{min\}}(n)$ to ensure continuous capacity estimation (not shown in Fig. 3). The value of $s_{i\{min\}}$ can vary as function of link status (active, backup, passive) and user priority (low, high).

The optimum session coding rate $R_c(n+1) = K/N$ for slot n+1 (where: K is the total deliverable payload and N is the total transmission batch size) can be determined by using the parameters $\mu_{\{D,i\}}(n)$ and $\sigma_{\{D,i\}}(n)$ of the latency-constrained capacity PDF in

$$p_s = \sum_{d_1=0}^{s_1} \cdots \sum_{d_m=0}^{s_m} \prod_{i=1}^{m} p(d_i|s_i) \mathbb{1}\left(\sum_{i=1}^{m} d_i - K\right)$$

where the operator "1(.)" is the Heaviside function and

$$p(d_i|s_i) = \begin{cases} 0 & d_i < 0 \\ 0 & d_i > s_i \\ \Phi\left(\frac{1-\mu_{d,i}}{\sigma_{d,i}}\right) & d_i = 0 \\ 1 - \Phi\left(\frac{s_i+1-\mu_{d,i}}{\sigma_{d,i}}\right) & d_i = s_i \\ \Phi\left(\frac{d_i+1-\mu_{d,i}}{\sigma_{d,i}}\right) - \Phi\left(\frac{d_i-\mu_{d,i}}{\sigma_{d,i}}\right) & \text{otherwise} \end{cases}$$

for $\Phi(x)$ being the CDF of a normal distribution with zero mean and unit variance.

Phase (3)

At the beginning of time slot n+1, the sender is configured to send a batch of $s_i(n+1)$ packets on path i. In the absence of any feedback relating to data delivery (as is the case when a connection is initiated n=o, or a connection is reset), batch size may be determined as a pre-defined constant or average link capacity (static approach), or some implementations may operate to utilise dynamic link probing (for example, payload / redundant data can be sent in a chirp sequence or ICMP probes are used).

According to some arrangements, if a user or application requires a fully reliable channel, the K payload packets include re-transmissions from previous slots. A packet is re-transmitted if no acknowledgment is received by the sender in time 2T + $\tau$/2, ie re-transmissions occur 2 slots after the original packet transmission. If the application does not require full reliability, the not acknowledged packets are not retransmitted, and K new payload packets will be considered instead.

The redundant N-K packets are encoded versions of the K payload packets. For example, a random linear coding approach can be used, according to which a redundancy packet is generated by multiplicatively scaling source packets and combining them additively together. Both operations of multiplication and addition are done over a suitable Galois field, for example of size 256. Missing packets can then be extracted from redundant encoded packets by using Gaussian elimination over the given Galois field. According to some implementations, un-encoded payload packets are sent before any redundancy on all paths to simplify decoding overhead (so-called systematic codes).

Encoded packets may carry a special header indicating all information required for their decoding. To avoid IP fragmentation, the maximum transmission unit (MTU) can be set such that the maximum payload size and the maximum control information size do not exceed the MTU if combined. Alternatively, any control signalling can be delivered in stand-alone control packets whose payload is subject to the MTU limit.

To avoid the need for any control signalling in general, the encoder and decoder (sender and receiver) may, in some implementations, agree on a predefined encoding configuration (for example, by means of an agreed seed for a random number generator).

In some implementations, the inter-packet interval $R_s(n)$ is computed as function of si(n) to ensure capacity allocation fairness. For example, packets are sent in the first half of the slot using inter-packet interval

$$R_s = \frac{T}{2s_i(n)}\left(1 - \frac{1}{\log(s_i(n))}\right)$$

whose logarithmic factor helps new flows to more efficiently compete for bottleneck buffer space with already ongoing flows, that is to say, new flows may enhance their throughput.

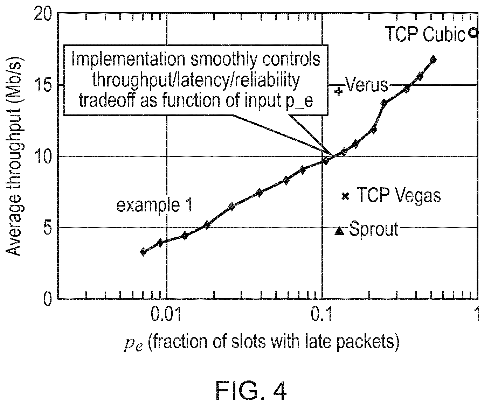

A performance evaluation of Example 1 is shown in Figure 4 which illustrates how the protocol described can balance performance trade-off in a smooth and consistent manner over a wide range of QoS constraints, giving large operational flexibility to applications.

The evaluation scenario assumed that a customer-critical user application (for example, Webex) in a standard mobile handset required data delivery of at most 100ms (typical human interactivity deadline). The handset avails of IEEE 802.11n (WiFi) and cellular LTE connectivity, which meant the application data can be delivered over two parallel independent paths.

When compared with protocols such as TCP Cubic, TCP Vegas Sprout and Verus, it can be seen that an implementation in line with arrangements described herein may maintain a given latency deadline of 100ms with up to 99.3% reliability, while other protocols fail in the best case at least 10% of the time. In the studied scenario, implementation in line with arrangements described herein achieves a throughput of 8 Mb/s for a 95% reliability target and 4 Mb/s with a 99% reliability target. Some of the other protocols achieve somewhat higher throughput but none of them have control over the throughput-vs-latency trade-off. Figure 4 illustrates graphically that an implementation in line with arrangements described herein is capable of smooth and consistent latency/reliability control.

In addition to flexible latency control, implementations in line with arrangements described herein are capable of ensuring inter-user fairness, another key performance indicator.

Table I summarizes the Jain Fairness Index (JFI) and the relative goodput (the average low-latency aggregated throughput normalized by the throughput of a single client) of each of the tested protocols. Implementations in line with arrangements described herein achieve almost perfect fairness when multiple clients share a connection, while all the other protocols fall short.

More specifically, the closest protocol to implementations in line with arrangements described herein in terms of latency, the Sprout protocol, collapses in terms of goodput in a multi-user scenario since it is not inherently designed for link sharing. TCP Vegas maintains a relatively stable throughput but with inferior fairness. Verus neither achieves inter-user fairness nor exploits available link capacity. Moreover, Verus loses 10% of the goodput relative to the single-client scenario.

**Table I** - *Performance comparison in $\mu$lti-user setup.*

| ALGORITHM | AVERAGE JFI | RELATIVE GOODPUT |
|-----------|-------------|------------------|
| TCP Cubic | 0.818 | 0.997 |
| TCP Vegas | 0.894 | 0.965 |
| Sprout | 0.514 | 0.006 |
| Verus | 0.889 | 0.897 |
| Invention | 0.996 | 1.010 |

Example 2: Deterministic latency control based on TCP

The second example of an implementation is based on TCP transport layer. That is to say, it reuses TCP decision-making logic and signalling.

Phase (1)

As in the previous example, the first step of an arrangement is such that an entity (sender, for example) operates to determine unconstrained ("raw") capacity for each available independent path between sender and receiver by using standard TCP processing of data acknowledgments (TCP ACK) and selective acknowledgments (TPC SACK). TCP time stamps are used to associate the (S)ACKs with time slots.

According to some arrangements, whenever SACKs are received by the sender, any unacknowledged packets that are deemed to be lost due to reasons other than congestion can still be included into the ACK-driven congestion window (CWND) increment as if the missing packets were acknowledged. A loss due to congestion can be defined as the number of consecutive unacknowledged packets reaching a given threshold, or as a minimum number of packets getting lost in a pre-defined time interval.

Some implementations may operate to determine a latency-constrained ("delivery") capacity of each path as a fraction of a current congestion window CWND proportional to a user or application reliability requirement $p_e$. For example, in one arrangement, a latency-constrained capacity can be set as half of the CWND in the slow start phase of TCP and in the congestion avoidance phase, the latency-constrained capacity can be set proportionally to the maximum failure rate $p_e$ (a higher CWND fraction would be used for lower failure rate $p_e$).

In alternative arrangements, latency-constrained capacity may be set to be a number of packets acknowledged in given time interval plus an estimated number of successfully delivered packets in the same time interval. The estimated number of successfully delivered packets can be derived from the number of packets in flight, for example, as a fraction of that number, inversely proportional to the determined round-trip time (RTT).

Phase (2)

According to the second example, optimum batch size can be set according to the unconstrained link capacity. A minimum batch size may be considered for the purpose of determining the latency-unconstrained capacity, especially when approaches like Kalman filtering are used to this end. The coding rate of a multi-connectivity connection can then be determined as a ratio of latency-constrained capacity and batch size.

To ensure that round-trip-time/queuing delay remains below a maximum value, tied to the application deadline, the number of in-flight packets, maximum permissible RTT threshold and application deadline can be used to refine both the unconstrained capacity (batch size) and the latency-constrained capacity. For example, the number of in-flight packets can be subtracted from the estimated batch size or its "deliverable" fraction given by the latency-constrained capacity. In this way, the link RTTs can be kept bounded by the application-set deadline.

Phase (3)

In the second example arrangement, data packets are sent whenever the number of in-flight packets is smaller than the batch size (not the CWND as in TCP), that is to say, in the second example, TCP ACKs serve as transmission triggers. In accordance with one implementation, every K payload packets are followed by N-K redundancy packets where K/N is the coding rate determined in phase (2).

It will be appreciated that arrangements described can be of particular use in cases of multiple-path communications. Implementation of a protocol according to arrangements can result in network operation such that data packets are received with a well-defined stable delay profile under time-varying network conditions. Implementation of a protocol according to arrangements can be observed in some implementations as a result of monitoring receiver feedback (for example, feedback comprising indication of delivered/missing packets in combination with timestamps) and actions taken in response thereto, for example, data send rate may not be reduced after a physical layer packet loss (for example, single-packet loss). Implementation of a protocol according to arrangements can be observed in some implementations as a result of monitoring data flow. Implementations may be such that a data flow exhibits encoded/redundancy packets and includes associated signalling (for example, packet header options carrying explicit/implicit references to generating source packets)

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method of sending data packets from a sender to a receiver in a communication network, over one or more communication links, said data packets forming a data flow, said method comprising:

   determining a latency constraint comprising a maximum delivery target time period associated with data packets forming said data flow;
   determining a reliability constraint comprising an indication of data packets of the data flow delivered within the latency constraint;
   obtaining an indication of performance of each of said one or more communication links between said sender and receiver, the indication of performance comprising feedback from said receiver in relation to one or more data packets sent by said sender to said receiver using said one or more communication links; and
   determining a raw data carrying capacity of each of said one or more communication links indicating the raw data carrying capacity of each of said one or more communication links within said latency constraint, based on said indication of performance of said one or more communication links;

determining a latency-constrained data carrying capacity of each of said one or more communication links indicating the data carrying capacity of each of said one or more communication links within said latency constraint, said latency-constrained data carrying capacity being based on said reliability constraint;

calculating a data batch size for each of said one or more communication links between said sender and receiver based on said determined raw data carrying capacity of each of said one or more communication links;

selecting a number of said data packets and redundant packets to send in said calculated data batch size in dependence upon said determined latency -constrained data carrying capacity of each of said one or more communication links ; and

sending one or more data packets from said data flow together with said redundant packets in accordance with said selection in said calculated data batch for each of said one or more communication links.

**2.** A method according to claim 1, wherein obtaining an indication of performance of each of said one or more communication links between said sender and receiver comprises: obtaining an indication of performance of said one or more communication links over a preceding time period equivalent to said maximum delivery target time period.

**3.** A method according to claim 1 or claim 2, wherein obtaining an indication of performance of each of said one or more communication links between said sender and receiver comprises: obtaining an indication of performance of said one or more communication links over a plurality of preceding time periods equivalent to said maximum delivery target time period.

**4.** A method according to any preceding claim, wherein obtaining an indication of performance comprises: receiving feedback relating to data received at said receiver within a time slot, said target maximum delivery time period comprising one or more time slots.

**5.** A method according to any preceding claim, wherein obtaining an indication of performance comprises: receiving an indication of one or more of: timestamp; data packet sequence number; number of data packets delivered within a time slot using said one or more communication links; number of data packets successfully delivered within said target maximum delivery time period; an indication of missing data packets in a time slot.

**6.** A method according to any preceding claim, wherein determining a raw data carrying capacity of each of said one or more communication links indicating the data carrying capacity of each of said one or more communication links within said maximum delivery target time comprises: using said indication of performance of said one or more communication links to calculate a time-related capacity measure.

**7.** A method according to any preceding claim, wherein determining a raw data carrying capacity of each of said one or more communication links indicating the data carrying capacity of each of said one or more communication links within said maximum delivery target time comprises: using said indication of performance of said one or more communication links to calculate a time-related capacity measure reduced proportionally to account for estimated capacity variance.

**8.** A method according to any preceding claim, wherein calculating a data batch size for each of said one or more communication links between said sender and receiver comprises: calculating a data batch size across each one of said one or more communication links, based on a determined raw data carrying capacity each one of said one or more communication links.

**9.** A method according to any preceding claim, wherein selecting a number of said data packets and redundant packets to send in said calculated data batch size in comprises: calculating a ratio comprising a sum of latency-constrained data carrying capacity across said one or more communication links to a sum of raw data carrying capacity across said one or more communication links and selecting said number of data packets to send in dependence upon said calculated ratio.

**10.** A method according to any preceding claim, wherein said one or more sent data packets comprise one or more new data packets and retransmission of one or more previously sent data packets forming said data flow.

**11.** A method according to any preceding claim, wherein said redundant packets comprise one or more error correction mechanisms including one or more network coding methods comprising: repetition; random linear codes; rateless codes; reed-solomon codes; parity codes; fountain codes; LPDC codes and hamming codes.

12. A method according to any preceding claim, wherein inter-packet intervals are computed as a function of said calculated batch size.

13. A computer program product operable, when executed on a computer, to perform the method of any one of claims 1 to 12.

14. Data packet transmission apparatus configured to send data packets to a receiver in a communication network, over one or more communication links, said data packets forming a data flow, said data packet transmission apparatus comprising:

target logic configured to determine: a latency constraint comprising a maximum delivery target time period associated with data packets forming said data flow; and a reliability constraint comprising an indication of data packets of the data flow delivered within the latency constraint;
feedback logic configured to obtain an indication of performance of each of said one or more communication links between said apparatus and said receiver, the indication of performance comprising feedback from said receiver in relation to one or more data packets sent by said sender to said receiver using said one or more communication links; and
capacity logic configured to determine:

a raw data carrying capacity of each of said one or more communication links indicating the raw data carrying capacity of each of said one or more communication links within said latency constraint, based on said indication of performance of said one or more communication links; and
a latency-constrained data carrying capacity of each of said one or more communication links indicating the data carrying capacity of each of said one or more communication links within said latency constraint, said latency-constrained data carrying capacity being based on said reliability constraint;
batch size logic configured to calculate a data batch size for each of said one or more communication links between said apparatus and said receiver based on said determined raw data carrying capacity of each of said one or more communication links;
selection logic configured to select a number of said data packets and redundant packets to send in said calculated data batch size in dependence upon said determined latency -constrained data carrying capacity of each of said one or more communication links; and
transmission logic configured to send one or more data packets from said data flow together with said redundant packets in accordance with said selection in said calculated data batch for each of said one or more communication links.

## Patentansprüche

1. Verfahren zum Senden von Datenpaketen von einem Absender in einem Kommunikationsnetzwerk über eine oder mehrere Kommunikationsverbindungen an einen Empfänger, wobei die Datenpakete einen Datenfluss bilden, wobei das Verfahren Folgendes umfasst:

Bestimmen einer Latenzeinschränkung, die eine maximale Ziellieferzeitperiode umfasst, die mit den Datenpaketen verknüpft ist, die den Datenfluss bilden;
Bestimmen einer Zuverlässigkeitseinschränkung, die eine Anzeige von Datenpaketen des innerhalb der Latenzeinschränkung gelieferten Datenflusses umfasst;
Erhalten einer Anzeige der Leistung von jeder der einen oder der mehreren Kommunikationsverbindungen zwischen dem Absender und dem Empfänger, wobei die Anzeige der Leistung eine Rückmeldung vom Empfänger mit Bezug auf ein oder mehrere Datenpakete umfasst, die vom Absender unter Verwendung der einen oder der mehreren Kommunikationsverbindungen an den Empfänger gesendet wurden; und
Bestimmen einer Rohdatentransportkapazität von jeder der einen oder der mehreren Kommunikationsverbindungen, die die Rohdatentransportkapazität von jeder der einen oder der mehreren Kommunikationsverbindungen innerhalb der Latenzeinschränkung anzeigt, auf Basis der Anzeige der Leistung der einen oder der mehreren Kommunikationsverbindungen;
Bestimmen einer latenzeingeschränkten Datentransportkapazität von jeder der einen oder der mehreren Kommunikationsverbindungen, die die Datentransportkapazität von jeder der einen oder der mehreren Kommunikationsverbindungen innerhalb der Latenzeinschränkung anzeigt, wobei die latenzeingeschränkte Datentransportkapazität auf der Zuverlässigkeitseinschränkung basiert;
Berechnen einer Datenstapelgröße für jede der einen oder der mehreren Kommunikationsverbindungen zwischen dem Absender und dem Empfänger auf Basis der bestimmten Rohdatentransportkapazität von jeder der einen oder der mehreren Kommunikationsverbindungen;
Auswählen einer Anzahl der Datenpakete und von redundanten Paketen, die in der berechneten Datenstapelgröße zu senden sind, in Abhängigkeit von der bestimmten latenzeingeschränkten Datentransportkapazität von jeder der einen oder der mehreren Kommunikationsverbindungen; und
Senden von einem oder mehreren Datenpaketen aus dem Datenfluss zusammen mit den redundanten Paketen gemäß der Auswahl im berechneten Datenstapel für jede der einen oder der mehreren Kommunikationsverbindungen.

2. Verfahren nach Anspruch 1, wobei das Erhalten einer Anzeige der Leistung von jeder der einen oder der mehreren Kommunikationsverbindungen zwischen dem Absender und dem Empfänger, Folgendes umfasst: Erhalten einer Anzeige der Leistung der einen oder der mehreren Kommunikationsverbindungen über eine vorherige Zeitperiode, die mit der maximalen Ziellieferzeitperiode äquivalent ist.

3. Verfahren nach Anspruch 1 oder Anspruch 2, wobei das Erhalten einer Anzeige der Leistung von jeder der einen oder der mehreren Kommunikationsverbindungen zwischen dem Absender und dem Empfänger, Folgendes umfasst: Erhalten einer Anzeige der Leistung der einen oder der mehreren Kommunikationsverbindungen über eine Vielzahl von vorherigen Zeitperioden, die mit der maximalen Ziellieferzeitperiode äquivalent sind.

4. Verfahren nach einem der vorhergehenden Ansprüche, wobei das Erhalten einer Anzeige der Leistung Folgendes umfasst: Empfangen einer Rückmeldung, die Daten betrifft, die am Empfänger innerhalb eines Zeitschlitzes empfangen wurden, wobei die maximale Ziellieferzeitperiode einen oder mehrere Zeitschlitze umfasst.

5. Verfahren nach einem der vorhergehenden Ansprüche, wobei das Erhalten einer Anzeige der Leistung Folgendes umfasst: Empfangen einer Anzeige von einem oder mehreren von Folgendem: Zeitstempel; Datenpaketsequenznummer; Anzahl von Datenpaketen, die unter Verwendung der einen oder der mehreren Kommunikationsverbindungen innerhalb eines Zeitschlitzes geliefert wurden; Anzahl von Datenpaketen, die innerhalb der maximalen Ziellieferzeitperiode erfolgreich geliefert wurden; eine Anzeige von fehlenden Datenpaketen in einem Zeitschlitz.

6. Verfahren nach einem der vorhergehenden Ansprüche, wobei das Bestimmen einer Rohdatentransportkapazität von jeder der einen oder der mehreren Kommunikationsverbindungen, die die Datentransportkapazität von jeder der einen oder der mehreren Kommunikationsverbindungen innerhalb der maximalen Ziellieferzeit anzeigt, Folgendes umfasst: Verwenden der Anzeige der Leistung der einen oder der mehreren Kommunikationsverbindungen, um ein zeitbezogenes Kapazitätsmaß zu berechnen.

7. Verfahren nach einem der vorhergehenden Ansprüche, wobei das Bestimmen einer Rohdatentransportkapazität von jeder der einen oder der mehreren Kommunikationsverbindungen, die die Datentransportkapazität von jeder der einen oder der mehreren Kommunikationsverbindungen innerhalb der maximalen Ziellieferzeit anzeigt, Folgendes umfasst: Verwenden der Anzeige der Leistung der einen oder der mehreren Kommunikationsverbindungen, um ein zeitbezogenes Kapazitätsmaß zu berechnen, das zur Berücksichtigung einer geschätzten Kapazitätsvarianz proportional reduziert wird.

8. Verfahren nach einem der vorhergehenden Ansprüche, wobei das Berechnen einer Datenstapelgröße für jede der einen oder der mehreren Kommunikationsverbindungen zwischen dem Absender und dem Empfänger Folgendes umfasst: Berechnen einer Datenstapelgröße über jede der einen oder der mehreren Kommunikationsverbindungen auf Basis einer bestimmten Rohdatentransportkapazität von jeder der einen oder der mehreren Kommunikationsverbindungen.

9. Verfahren nach einem der vorhergehenden Ansprüche, wobei das Auswählen einer Anzahl der Datenpakete und redundanten Pakete, die in der berechneten Datenstapelgröße zu senden sind, Folgendes umfasst: Berechnen eines Verhältnisses, das eine Summe einer latenzeingeschränkten Datentransportkapazität über die eine oder die mehreren Kommunikationsverbindungen zu einer Summe einer Rohdatentransportkapazität über die eine oder die mehreren Kommunikationsverbindungen umfasst, und Auswählen der Anzahl von Datenpaketen, die in Abhängigkeit vom berechneten Verhältnis zu senden sind.

10. Verfahren nach einem der vorhergehenden Ansprüche, wobei das eine oder die mehreren gesendeten Datenpakete ein oder mehrere neue Datenpakete und eine Neuübertragung von einem oder mehreren zuvor gesendeten Datenpaketen, die den Datenfluss bilden, umfassen.

11. Verfahren nach einem der vorhergehenden Ansprüche, wobei die redundanten Pakete einen oder mehrere Fehlerkorrekturmechanismen umfassen, die ein oder mehrere Netzwerkcodierverfahren beinhalten, die Folgendes umfassen: Wiederholung; willkürliche lineare Codes; ratenlose Codes; Riet-Solomon-Codes; Paritätscodes; Fountain-Codes; LPDC-Codes und Hamming-Codes.

12. Verfahren nach einem der vorhergehenden Ansprüche, wobei Intervalle zwischen Paketen in Abhängigkeit von der berechneten Stapelgröße errechnet werden.

13. Computerprogrammprodukt, das betreibbar ist, wenn es auf einem Computer ausgeführt wird, das Verfahren von einem der Ansprüche 1 bis 12 durchzuführen.

14. Datenpaketübertragungsvorrichtung, die dazu ausgelegt ist, Datenpakete in einem Kommunikationsnetzwerk über eine oder mehrere Kommunikationsverbindungen an einen Empfänger zu senden, wobei die Datenpakete einen Datenfluss bilden, wobei die Datenpaketübertragungsvorrichtung Folgendes umfasst:

Ziellogik, die dazu ausgelegt ist, Folgendes zu bestimmen: eine Latenzeinschränkung, die eine maximale Ziellieferzeitperiode umfasst, die mit den Datenpaketen verknüpft ist, die den Datenfluss bilden; und eine Zuverlässigkeitseinschränkung, die eine Anzeige von Datenpaketen des innerhalb der Latenzeinschränkung gelieferten Datenflusses umfasst;
Rückmeldungslogik, die dazu ausgelegt ist, eine Anzeige der Leistung von jeder der einen oder der mehreren Kommunikationsverbindungen zwischen der Vorrichtung und dem Empfänger zu erhalten, wobei die Anzeige der Leistung eine Rückmeldung vom Empfänger mit Bezug auf ein oder mehrere Datenpakete umfasst, die vom Absender unter Verwendung der einen oder der mehreren Kommunikationsverbindungen an den Empfänger gesendet wurden; und
Kapazitätslogik, die dazu ausgelegt ist, Folgendes zu bestimmen:

eine Rohdatentransportkapazität von jeder der einen oder der mehreren Kommunikationsverbindungen, die die Rohdatentransportkapazität von jeder der einen oder der mehreren Kommunikationsverbindungen innerhalb der Latenzeinschränkung anzeigt, auf Basis der Anzeige der Leistung der einen oder der mehreren Kommunikationsverbindungen; und
eine latenzeingeschränkte Datentransportkapazität von jeder der einen oder der mehreren Kommunikationsverbindungen, die die Datentransportkapazität von jeder der einen oder der mehreren Kommunikationsverbindungen innerhalb der Latenzeinschränkung anzeigt, wobei die latenzeingeschränkte Datentransportkapazität auf der Zuverlässigkeitseinschränkung basiert;
Stapelgrößenlogik, die dazu ausgelegt ist, für jede der einen oder der mehreren Kommunikationsverbindungen zwischen der Vorrichtung und dem Empfänger auf Basis der bestimmten Rohdatentransportkapazität von jeder der einen oder der mehreren Kommunikationsverbindungen eine Datenstapelgröße zu berechnen;
Auswahllogik, die dazu ausgelegt ist, eine Anzahl der Datenpakete und redundanten Pakete, die in der berechneten Datenstapelgröße zu senden sind, in Abhängigkeit von der bestimmten latenzeingeschränkten Datentransportkapazität von jeder der einen oder der mehreren Kommunikationsverbindungen auszuwählen; und
Übertragungslogik, die dazu ausgelegt ist, ein oder mehrere Datenpakete aus dem Datenfluss zusammen mit den redundanten Paketen gemäß der Auswahl im berechneten Datenstapel für jede der einen oder der mehreren Kommunikationsverbindungen zu senden.

**Revendications**

1. Procédé d'envoi de paquets de données d'un expéditeur à un destinataire dans un réseau de communication, sur une ou plusieurs liaisons de communication, lesdits paquets de données formant un flux de données, ledit procédé comprenant :

la détermination d'une contrainte de latence comprenant une période de temps cible de distribution maximale associée à des paquets de données formant ledit flux de données ;
la détermination d'une contrainte de fiabilité comprenant une indication de paquets de données du flux de données distribué dans la contrainte de latence ;
l'obtention d'une indication de la performance de chacune desdites une ou plusieurs liaisons de communication entre lesdits expéditeur et destinataire, l'indication de la performance comprenant une rétroaction dudit destinataire concernant un ou plusieurs paquets de données envoyés par ledit expéditeur audit destinataire en utilisant lesdites une ou plusieurs liaisons de communication ; et
la détermination d'une capacité de transport de données brutes de chacune desdites une ou plusieurs liaisons de communication indiquant la capacité de transport de données brutes de chacune desdites une ou plusieurs liaisons de communication dans ladite contrainte de latence, sur la base de ladite indication de la performance desdites une ou plusieurs liaisons de communication ;
la détermination d'une capacité de transport de données à contrainte de latence de chacune desdites une ou plusieurs liaisons de communication indiquant la capacité de transport de données de chacune desdites une ou plusieurs liaisons de communication dans ladite contrainte de latence, ladite capacité de transport de données à contrainte de latence étant basée sur ladite contrainte de fiabilité ;
le calcul d'une taille de lot de données pour chacune desdites une ou plusieurs liaisons de communication entre lesdits expéditeur et destinataire, sur la base de ladite capacité de transport de données brutes déterminée de chacune desdites une ou plusieurs liaisons de communication ;
la sélection d'un nombre desdits paquets de données et de paquets redondants à envoyer dans ladite taille de lot de données calculée en fonction de ladite capacité de transport de données à contrainte de latence déterminée de chacune desdites une ou plusieurs liaisons de communication ; et
l'envoi d'un ou plusieurs paquets de données provenant dudit flux de données avec lesdits paquets redondants conformément à ladite sélection dans ledit lot de données calculé pour chacune desdites une ou plusieurs liaisons de communication.

2. Procédé selon la revendication 1, dans lequel l'obtention d'une indication de la performance de chacune desdites une ou plusieurs liaisons de communication entre lesdits expéditeur et destinataire comprend : l'obtention d'une indication de la performance desdites une ou plusieurs liaisons de communication sur une période de temps précédente équivalente à ladite période de temps cible de distribution maximale.

3. Procédé selon la revendication 1 ou la revendication 2, dans lequel l'obtention d'une indication de la performance de chacune desdites une ou plusieurs liaisons de communication entre lesdits expéditeur et destinataire comprend : l'obtention d'une indication de la performance desdites une ou plusieurs liaisons de communication sur une pluralité de périodes de temps précédentes équivalentes à ladite période de temps cible de distribution maximale.

4. Procédé selon l'une quelconque des revendications précédentes, dans lequel l'obtention d'une indication de la performance comprend : la réception d'une rétroaction concernant des données reçues par ledit destinataire dans un créneau horaire, ladite période de temps cible de distribution maximale comprenant un ou plusieurs créneaux horaires.

5. Procédé selon l'une quelconque des revendications précédentes, dans lequel l'obtention d'une indication de la performance comprend : la réception d'une indication d'un ou plusieurs parmi : un horodatage ; un numéro de séquence de paquets de données ; un nombre de paquets de données distribué dans un créneau horaire en utilisant lesdites une ou plusieurs liaisons de communication ; un nombre de paquets de données distribués avec succès dans ladite période de temps cible de distribution maximale ; une indication de paquets de données manquants dans un créneau horaire.

6. Procédé selon l'une quelconque des revendications précédentes, dans lequel la détermination d'une capacité de transport de données brutes de chacune desdites une ou plusieurs liaisons de communication indiquant la capacité de transport de données de chacune desdites une ou plusieurs liaisons de communication dans ledit temps cible de distribution maximal comprend : l'utilisation de ladite indication de la performance desdites une ou plusieurs liaisons de communication pour calculer une mesure de capacité liée au temps.

7. Procédé selon l'une quelconque des revendications précédentes, dans lequel la détermination d'une capacité de transport de données brutes de chacune desdites une ou plusieurs liaisons de communication indiquant la capacité de transport de données de chacune desdites une ou plusieurs liaisons de communication dans ledit temps cible de distribution maximal comprend : l'utilisation de ladite indication de la performance desdites une ou plusieurs liaisons de communication pour calculer une mesure de capacité liée au temps réduite proportionnellement pour tenir compte d'une variance de capacité estimée.

8. Procédé selon l'une quelconque des revendications précédentes, dans lequel le calcul d'une taille de lot de données pour chacune desdites une ou plusieurs liaisons de communication entre lesdits expéditeur et destinataire comprend : le calcul d'une taille de lot de données sur chacune desdites une ou plusieurs liaisons de communication, sur la base d'une capacité de transport de données brutes déterminée chacune desdites une ou plusieurs liaisons de communication.

9. Procédé selon l'une quelconque des revendications précédentes, dans lequel la sélection d'un nombre desdits paquets de données et de paquets redondants à envoyer dans ladite taille de lot de données calculée comprend : le calcul d'un rapport comprenant une somme de la capacité de transport de données à contrainte de latence sur lesdites une ou plusieurs liaisons de communication sur une somme de la capacité de transport de données brutes sur lesdites une ou plusieurs liaisons de communication, et la sélection dudit nombre de paquets de données à envoyer en fonction dudit rapport calculé.

10. Procédé selon l'une quelconque des revendications précédentes, dans lequel lesdits un ou plusieurs paquets de données envoyés comprennent un ou plusieurs nouveaux paquets de données et la retransmission d'un ou plusieurs paquets de données envoyés précédemment formant ledit flux de données.

11. Procédé selon l'une quelconque des revendications précédentes, dans lequel lesdits paquets redondants comprennent un ou plusieurs mécanismes de correction d'erreur comportant un ou plusieurs procédés de codage de réseau comprenant : une répétition ; des codes linéaires aléatoires ; des codes sans débit ; des codes de Reed-Solomon ; des codes de parité ; des codes de fontaine ; des codes LPDC et des codes de Hamming.

12. Procédé selon l'une quelconque des revendications précédentes, dans lequel les intervalles inter-paquets sont calculés en fonction de ladite taille de lot calculée.

13. Produit de programme informatique fonctionnant, lorsqu'il est exécuté sur un ordinateur, pour effectuer le procédé de l'une quelconque des revendications 1 à 12.

14. Appareil de transmission de paquets de données configuré pour envoyer des paquets de données à un destinataire dans un réseau de communication, sur une ou plusieurs liaisons de communication, lesdits paquets de données formant un flux de données, ledit appareil de transmission de paquets de données comprenant :

une logique cible configurée pour déterminer : une contrainte de latence comprenant une période de temps cible de distribution maximale associée à des paquets de données formant ledit flux de données ; et une contrainte de fiabilité comprenant une indication de paquets de données du flux de données distribué dans la contrainte de latence ;
une logique de rétroaction configurée pour obtenir une indication de la performance de chacune desdites une ou plusieurs liaisons de communication entre ledit appareil et ledit destinataire, l'indication de la performance comprenant une rétroaction dudit destinataire concernant un ou plusieurs paquets de données envoyés par ledit expéditeur audit destinataire en utilisant lesdites une ou plusieurs liaisons de communication ; et
une logique de capacité configurée pour déterminer : une capacité de transport de données brutes de chacune desdites une ou plusieurs liaisons de communication indiquant la capacité de transport de données brutes de chacune desdites une ou plusieurs liaisons de communication dans ladite contrainte de latence, sur la base de ladite indication de la performance desdites une ou plusieurs liaisons de communication ; et
une capacité de transport de données à contrainte de latence de chacune desdites une ou plusieurs liaisons de communication indiquant la capacité de transport de données de chacune desdites une ou plusieurs liaisons de communication dans ladite contrainte de latence, ladite capacité de transport de données à contrainte de latence étant basée sur ladite contrainte de fiabilité ;
une logique de taille de lot configurée pour calculer une taille de lot de données pour chacune desdites une ou plusieurs liaisons de communication entre ledit appareil et ledit destinataire sur la base de ladite capacité de transport de données brutes déterminée de chacune desdites une ou plusieurs liaisons de communication ;
une logique de sélection configurée pour sélectionner un nombre desdits paquets de données et de paquets redondants à envoyer dans ladite taille de lot de données calculée en fonction de ladite capacité de transport de données à contrainte de latence déterminée de chacune desdites une ou plusieurs liaisons de communication ; et
une logique de transmission configurée pour envoyer un ou plusieurs paquets de données provenant dudit flux de données avec lesdits paquets redondants conformément à ladite sélection dans ledit lot de données calculé pour chacune desdites une ou plusieurs liaisons de communication.

new time slot

| determine raw capacity of<br>each link in past slot<br>using receiver feedback | Phase 1a |

| determine latency-constrained<br>capacity of each link in past slot<br>using receiver feedback | Phase 1b |

| determine optimum transmission batch size<br>for each path as well as optimum coding rate of<br>multi-path session satisfying QoS constraints | Phase 2 |

| generate both payload and<br>redundancy packets and<br>send them in specific intervals | Phase 3 |

# FIG. 1

FIG. 2

ACK packets

Receiver (path 1)

Encoded packets

Aggregated send rate

Information packets
Redundant packets

Send rate

Useful data rate
Capacity

ACK packets

Receiver (path 2)

Encoded packets

Path 1

Send rate

Capacity

Path 2

Send rate

Capacity

CDF

$P_e$

0.2
0.4
0.6
0.8

1. Capacity forecast from ACKs

2. Multi-path aggregation

3. Multi-path encoding and scheduling

4. Receiver feedback

FIG. 3

EP 3 725 049 B1

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016128179 A1

**Non-patent literature cited in the description**

- Streaming High-Quality Mobile Video with Multipath TCP in Heterogeneous Wireless Networks. **WU JIYAN et al.** IEEE Transactions on mobile computing. IEEE Service Center, 01 September 2016, vol. 15, 2345-2361